# FASCICULE DE BREVET EUROPEEN

(11) **EP 1 703 610 B1**
(45) Date de publication et mention de la délivrance du brevet: **14.11.2007**
(21) Numéro de dépôt: 06300210.9
(22) Date de dépôt: 08.03.2006
(51) Int. Cl.: H02G 15/34, H01R 4/68

(54) **Structure de connexion électrique pour élément supraconducteur**
Elektrischer Verbindungszusammenbau für supraleitendes Element
Electrical connection structure for superconducting element

(30) Priorité: 17.03.2005 FR 0550694
(43) Date de publication de la demande: 20.09.2006
(73) Titulaire: Nexans, 75008 Paris (FR)
(72) Inventeur: Lallouet, Nicolas, 62132 Fiennes (FR); Maguire, James, Andover, Massachussetts (US)
(74) Mandataire: Lenne, Laurence

(56) Documents cités:
- EP-A- 0 780 926
- EP-A- 1 283 576
- EP-A- 1 489 693

## Description

La présente invention a pour objet une structure de connexion électrique pour élément supraconducteur, tel qu'un câble transportant du courant électrique sous moyenne ou haute tension. Cette structure permet de relier l'extrémité de l'élément supraconducteur à température cryogénique à un équipement ou dispositif à température ambiante, habituellement à l'air libre.

Du fait de la différence importante de température entre l'élément supraconducteur et l'équipement à relier audit élément, d'une part température cryogénique qui peut être de l'ordre de -200°C et d'autre part température ambiante, il est nécessaire d'intercaler une structure de connexion entre l'élément et l'équipement afin d'effectuer la transition de température en limitant au maximum les pertes thermiques, tout en respectant les contraintes électriques dues par exemple à la haute tension dans le cas d'un câble. Cette structure comporte alors une traversée électrique composée principalement d'un conducteur central entouré d'une gaine isolante, pour transporter le courant électrique du câble supraconducteur jusqu'à une connexion de sortie à température ambiante. Cette structure doit, sur une longueur raisonnable, effectuer la transition de température tout en s'assurant que les pertes par conduction thermique sont faibles de façon à éviter l'ébullition du liquide cryogénique qui refroidit le câble et/ou de façon à ne pas augmenter les coûts de refroidissement du câble.

La solution à ce problème consiste à munir la structure de connexion d'une enceinte intermédiaire adiabatique, un sas ou une enceinte "tampon" en quelque sorte, placée entre la partie à température cryogénique et la partie de la structure de connexion à température ambiante. La traversée électrique traverse l'enceinte intermédiaire. Cette solution est par exemple décrite dans la demande de brevet EP 1 283 576. Les parois latérales de l'enceinte intermédiaire sont constituées par les parois latérales d'un cryostat. Les parois inférieure et supérieure comportent des brides de fixation au travers desquelles passe la traversée électrique, la paroi inférieure étant adjacente à la partie à température cryogénique et la paroi supérieure étant adjacente à la partie à température ambiante. L'enceinte intermédiaire est soit placée sous vide, soit remplie d'un gaz. Il est donc impératif que les passages de la traversée électrique au travers des parois inférieure et supérieure soient étanches, ce qui conduit à des contraintes de réalisation difficiles et coûteuses. Par exemple, même un très léger manque d'étanchéité entre la partie à température cryogénique et l'enceinte intermédiaire (par exemple une fuite de l'ordre de 10⁻⁸ mbar/l.sec) conduit inévitablement à un changement de composition du gaz ou une dégradation du niveau de vide dans l'enceinte intermédiaire. Si le fluide cryogénique est de l'azote liquide, un manque d'étanchéité conduit à la présence d'azote gazeux dans l'enceinte intermédiaire, ce qui entraîne, d'une part, une consommation supplémentaire d'azote liquide et, d'autre part, une diminution de l'isolation thermique de l'enceinte intermédiaire. La surpression dans l'enceinte intermédiaire résultant d'une telle fuite ne peut en outre pas être gérée par des soupapes de sécurité car leur ouverture signifierait la destruction du milieu d'isolation thermique (vide ou gaz). De plus, la maintenance sur site, hors atelier, d'une telle structure de connexion n'est pas facile. Par exemple, refaire le vide ou remplir de gaz l'enceinte intermédiaire sur site nécessite des équipements spéciaux et du personnel spécialement formé.

La présente invention apporte une solution à ce problème technique, en n'utilisant ni gaz, ni vide dans l'enceinte intermédiaire.

De façon plus précise, la présente invention concerne une structure de connexion électrique pour élément supraconducteur refroidi par un fluide cryogénique et relié à une traversée électrique, laquelle traverse successivement une enceinte à température intermédiaire entre la température ambiante et la température du fluide cryogénique et une enceinte à température ambiante, ladite traversée débouchant à l'extérieur de l'enceinte à température ambiante. Selon l'invention, ladite enceinte intermédiaire est remplie, au moins partiellement, d'un matériau solide à faible conductivité thermique.

De façon avantageuse, ledit matériau est à base de mousse, comme une mousse au polyuréthane ou une mousse de verre cellulaire.

Selon le mode de réalisation préféré, l'enceinte intermédiaire forme un cryostat muni d'une vanne de sécurité et l'enceinte à température ambiante est remplie, au moins partiellement, d'un liquide électriquement isolant. Les parois externes de l'enceinte à température ambiante sont formées d'un matériau électriquement isolant. Ledit liquide est avantageusement de l'huile.

Selon un mode de réalisation, la traversée électrique comporte un conducteur central entouré d'une gaine électriquement isolante, laquelle se termine à l'une de ses deux extrémités par un bulbe débouchant dans le fluide cryogénique.

D'autres avantages et caractéristiques de l'invention apparaîtront au cours de la description qui suit d'un mode de réalisation de l'invention, donné à titre d'exemple non limitatif, en référence aux dessins annexés et sur lesquels :
- la figure 1 illustre schématiquement le principe de l'invention, et
- la figure 2 montre en coupe longitudinale un mode de réalisation de l'invention.

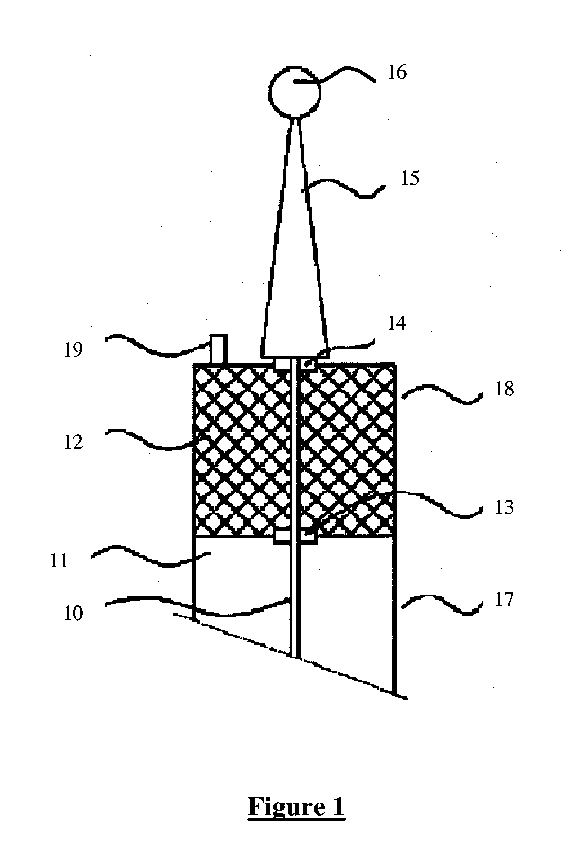

Sur la figure 1, la structure de connexion à un câble supraconducteur (non représenté) comporte une traversée électrique 10 connectée à l'élément supraconducteur par son extrémité inférieure située dans une enceinte 11 à température cryogénique. Une enceinte intermédiaire 12, adjacente à l'enceinte cryogénique 11, est remplie d'un matériau solide à faible conductivité thermique. Ce matériau est de préférence sous forme de mousse, telle qu'une mousse au polyuréthane ou une mousse de verre cellulaire, par exemple disponible commercialement sous la marque Foamglas. La traversée électrique 10 traverse la paroi inférieure de l'enceinte intermédiaire 11 par une bride de fixation étanche 13 et la paroi supérieure par une bride de fixation étanche 14. La traversée électrique 10 se prolonge, en sortant de l'enceinte intermédiaire 12, à l'intérieur d'une enceinte à température ambiante 15 qui se termine par des moyens 16 de connexion électrique de la traversée, et donc de l'élément supraconducteur, à un équipement ou dispositif approprié. L'enceinte intermédiaire se trouve donc à une température comprise entre la température du fluide cryogénique et la température ambiante. Les parois 17 et 18 respectivement de l'enceinte 11 à température cryogénique et de l'enceinte intermédiaire 12 forment des parois de cryostat pour une bonne isolation thermique. L'enceinte intermédiaire, étant étanche, est de préférence équipée d'une vanne de sécurité 19 afin de palier à toute surpression qui pourrait survenir en cas de fuite au niveau des brides 13 et 14.

On remarque que l'invention permet d'éliminer le problème d'une faible fuite au niveau des brides 13 et 14. L'efficacité d'isolation thermique est maintenue à un niveau relativement constant, même en cas d'une fuite légère des brides 13 et 14 puisqu'elle n'aurait aucun effet sur la propriété d'isolation du matériau solide remplissant l'enceinte intermédiaire.

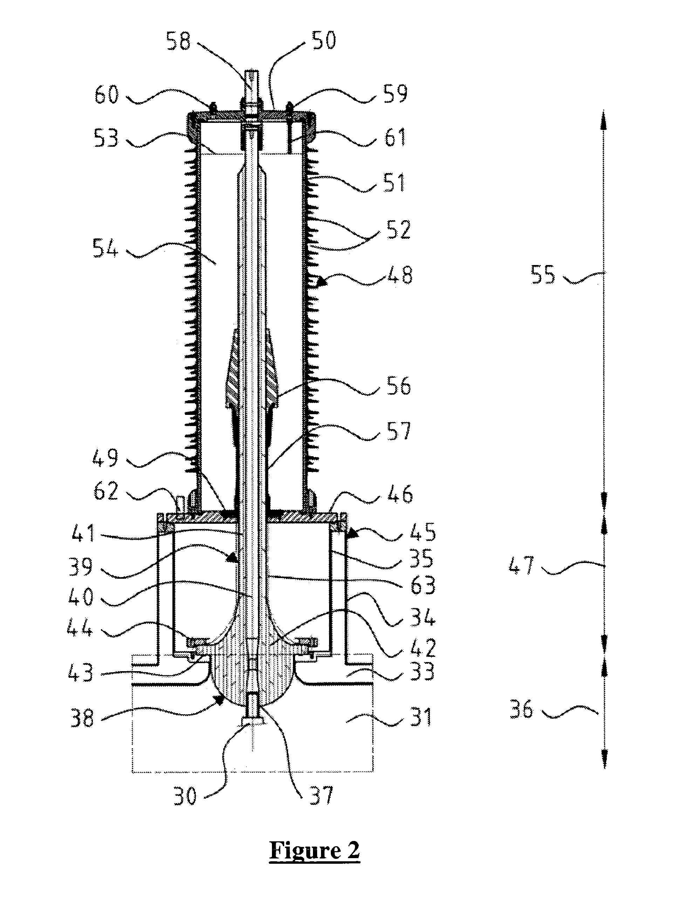

Sur la figure 2 qui représente en coupe longitudinale un mode de réalisation de l'invention, un câble supraconducteur 30 est refroidi par un fluide cryogénique 31, de l'azote liquide par exemple, contenu dans un cryostat 33 ayant une paroi externe 34 et une paroi interne 35. Le niveau de vide entre ces deux parois peut par exemple être de l'ordre de 10⁻⁵ mbar. La zone désignée par la référence 36 est à la température cryogénique, ce qui pour les supraconducteurs dits "haute température" est de l'ordre de -200°C.

L'extrémité du câble supraconducteur est reliée par une connexion électrique 37 à l'extrémité inférieure 38 d'une traversée électrique 39. Cette dernière est principalement constituée d'un conducteur central 40, en alliage d'aluminium ou en cuivre, autour duquel a été moulée une gaine électriquement isolante 41, réalisée par exemple en époxy. Cette dernière se termine à son extrémité inférieure par un bulbe 42 comprenant une collerette de fixation 43. Une bride 44 fixe de façon étanche le bulbe 42 sur la paroi interne 35 du cryostat 33. La surface externe de la gaine isolante est recouverte d'une couche 63 d'un matériau électriquement conducteur, par métallisation par exemple. Ce matériau étant relié au potentiel électrique de la terre et le câble supraconducteur étant sous haute tension, l'extrémité inférieure 38 de la gaine isolante a avantageusement la forme d'un bulbe de façon à augmenter la ligne de fuite entre terre et haute tension et éviter ainsi un claquage électrique au niveau de l'extrémité 38.

Les parois interne 35 et externe 34 du cryostat se prolongent verticalement pour former les parois latérales d'une enceinte intermédiaire 45. Cette enceinte est donc très bien isolée thermiquement. Le fond de cette enceinte intermédiaire est fermé de façon étanche par le bulbe 42 et le dessus de l'enceinte par un plateau 46 qui peut être réalisée en un alliage métallique (alliage d'aluminium ou acier inoxydable par exemple). L'enceinte intermédiaire est remplie d'un matériau solide à faible conductivité thermique. Ce matériau est de préférence sous forme de mousse, telle qu'une mousse au polyuréthane ou une mousse de verre cellulaire, tel que par exemple la mousse de verre cellulaire commercialisée sous la marque Foamglas. Il est préférable de remplir complètement l'enceinte intermédiaire de ce matériau solide, mais on peut concevoir de ne la remplir que partiellement. Pour remplir l'enceinte intermédiaire, un ou plusieurs blocs de mousse solide peuvent être usinés, par exemple deux blocs en forme de demie coquille ou un bloc usiné avec un trou central ayant une forme complémentaire de la partie de la traversée électrique 39 située dans l'enceinte intermédiaire 45, ce ou ces blocs étant ensuite placé(s) dans l'enceinte intermédiaire. La température de la zone 47 est intermédiaire entre la température cryogénique et la température ambiante.

Au-dessus de l'enceinte intermédiaire 45, une enceinte à température ambiante 48 est fixée sur le plateau 46. Ce dernier a une bonne conductivité thermique de façon à établir un bon échange thermique entre la température ambiante de l'air et le bas de l'enceinte à température ambiante 48. La traversée électrique 39 traverse de façon étanche cette paroi supérieure 46 à l'aide d'une bride de fixation et d'étanchéité 49 et débouche à l'extérieur de l'enceinte 48 à travers la paroi supérieure 50 de cette enceinte à température ambiante. La paroi latérale de cette dernière est constituée d'un isolant électrique 51, par exemple une époxy renforcée par des fibres de verre, désignée habituellement par FRP (abréviation de "Fiber Reinforced Polymer"). La surface externe de cette paroi comporte une succession d'ailettes 52 en matériau isolant, par exemple en silicone, destinées à allonger le parcours dun courant de fuite éventuel en surface, dû à des impuretés déposées sur cette surface et apportées par la pollution environnante et par la pluie. L'enceinte 48 à température ambiante est remplie jusqu'au niveau 53 d'un liquide 54 bon isolant électrique, tel que de l'huile silicone. En plus d'assurer une bonne isolation électrique de la traversée électrique 39, le liquide 54 facilite la stabilisation thermique de l'enceinte à température ambiante. La zone 55 est ainsi à une température proche de la température ambiante.

Un cône de contrainte 56, situé dans l'enceinte 48 à température ambiante, entoure la traversée électrique 39 au niveau de l'arrêt de la couche métallisée 63 et est relié électriquement à celle-ci ainsi qu'à la bride de fixation étanche 49 par l'intermédiaire par exemple d'un enrubannage 57 de rubans semi-conducteurs. La fonction de ce cône de contrainte est de déployer ou d'évaser les lignes de champ électrique au niveau de l'arrêt de la métallisation afin d'éviter une discontinuité qui pourrait conduire à un claquage électrique. La traversée électrique 39 se termine à l'extérieur de l'enceinte à température ambiante 48 par une cosse de connexion 58 pour alimenter le câble supraconducteur en courant électrique sous moyenne ou haute tension ou pour alimenter un équipement à température ambiante en courant électrique sous moyenne ou haute tension en provenance du câble supraconducteur 30.

Le plateau 46 est de préférence munie d'une vanne de sécurité 62 afin d'évacuer une éventuelle surpression dans l'enceinte intermédiaire 45 qui pourrait être due à une fuite de liquide réfrigérant au niveau de la collerette 43 et de la bride de fixation 44, le liquide réfrigérant passant alors sous forme gazeuse dans l'enceinte intermédiaire.

L'enceinte à température ambiante comporte également deux vannes de connexion 59 et 60 permettant le remplissage d'huile, la vanne 58 étant reliée à un tuyau plongeur 61 en polyéthylène permettant de contrôler le niveau d'huile dans l'enceinte.

La structure de connexion électrique qui vient d'être décrite et qui comporte une enceinte intermédiaire remplie, au moins en partie, d'un matériau solide et bon isolant thermique permet une bonne transition de température entre la partie à température cryogénique et la partie à température ambiante, avec un flux thermique limité dans le liquide cryogénique et compatible avec les conditions de fonctionnement de l'installation et avec un entretien aisé en atelier et sur le site. La hauteur de la structure, et notamment la hauteur de l'enceinte intermédiaire, peut être facilement adaptée aux conditions de différence de températures entre la partie cryogénique et la partie ambiante et aux conditions électriques telles que les valeurs de la tension et du courant.

Le mode de réalisation décrit se rapporte à la connexion d'un câble supraconducteur. Il est cependant évident pour l'homme du métier que l'invention s'applique à la connexion de tout élément supraconducteur, à température cryogénique, qui doit être relié à un équipement ou dispositif ou appareil à température ambiante.

## Revendications

1. Structure de connexion électrique pour élément supraconducteur (30) refroidi par un fluide cryogénique (31) et relié à une traversée électrique (10, 39), laquelle traverse successivement une enceinte à température intermédiaire (12, 45) entre la température ambiante et la température du fluide cryogénique et une enceinte à température ambiante (15, 48), ladite traversée (10, 39) débouchant à l'extérieur de l'enceinte à température ambiante, ladite structure étant **caractérisée en ce que** ladite enceinte intermédiaire (12, 45) est remplie, au moins partiellement, d'un matériau solide à faible conductivité thermique.

2. Structure de connexion selon la revendication 1 **caractérisée en ce que** ledit matériau est à base de mousse.

3. Structure de connexion selon la revendication 1 ou 2 **caractérisée en ce qu**e ledit matériau est une mousse de verre cellulaire ou une mousse au polyuréthane.

4. Structure de connexion selon l'une des revendications précédentes **caractérisée en ce que** les parois latérales (18, 34-35) de ladite enceinte intermédiaire (12, 45) sont formées par les parois d'un cryostat.

5. Structure de connexion selon l'une des revendications précédentes **caractérisée en ce que** ladite enceinte intermédiaire (12, 45) est munie d'une vanne de sécurité (19, 62).

6. Structure de connexion selon l'une des revendications précédentes **caractérisée en ce que** ladite enceinte à température ambiante (15, 48) est remplie, au moins partiellement, d'un liquide électriquement isolant (54) et **en ce que** les parois externes de ladite enceinte sont formées d'un matériau électriquement isolant.

7. Structure de connexion selon la revendication 6 **caractérisée en ce que** ledit liquide (54) est de l'huile.

8. Structure de connexion selon l'une des revendications précédentes **caractérisée en ce que** ladite traversée électrique (10, 39) comporte un conducteur central (40) entouré d'une gaine électriquement isolante (41), laquelle se termine à l'une (38) de ses deux extrémités en forme de bulbe (42) débouchant dans ledit fluide cryogénique (31).

9. Structure de connexion selon la revendication 8 **caractérisée en ce que** ledit bulbe (42) comporte une bride de fixation étanche (43) pour fixer ledit bulbe à ladite enceinte intermédiaire.

10. Structure de connexion selon l'une des revendications précédentes **caractérisée en ce que** ledit élément supraconducteur est un câble (30).

## Claims

1. Electrical connection structure for supraconductor element (30) cooled by a cryogenic fluid (31) and connected to an electrical bushing (10, 39), which successively crosses an enclosure having an intermediate temperature (12, 45) between the ambient temperature and the temperature of the cryogenic fluid and an enclosure at the ambient temperature (15, 48), said bushing (10, 39) leading outside the ambient temperature enclosure, said structure being **characterized in that** said intermediate enclosure (12, 45) is filled, at least partially, with a solid material having low thermal conductivity.

2. Connection structure according to claim 1, **characterized in that** said material is foam-based.

3. Connection structure according to claim 1 or 2, **characterized in that** said material is a cellular glass foam or a polyurethane foam.

4. Connection structure according to one of the preceding claims **characterized in that** the side walls (18, 34-35) of said intermediate enclosure (12, 45) are formed by the walls of a cryostat.

5. Connection structure according to one of the preceding claims, **characterized in that** said intermediate enclosure (12, 45) is provided with a safety valve (19, 62).

6. Connection structure according to one of the preceding claims, **characterized in that** said ambient temperature enclosure (15, 48) is filled, at least partially, with an electrically insulating liquid (54) and **in that** the outside walls of said enclosure are formed of an electrically insulating material.

7. Connection structure according to claim 6, **characterized in that** said liquid (54) is oil.

8. Connection structure according to one of the preceding claims, **characterized in that** said electrical bushing (10, 39) includes central conductor (40) surrounded by an electrically insulating sheath (41), which ends at one (38) of its extremities in a bulb shape (42) arriving in said cryogenic fluid (31).

9. Connection structure according to claim 8, **characterized in that** said bulb (42) comprises an impermeable fastening clip (43) to fix said bulb to said intermediate enclosure.

10. Connection structure according to one of the preceding claims, **characterized in that** said supraconductor element is a cable (30).

## Patentansprüche

1. Elektrische Verbindungsstruktur für ein supraleitendes Element (30), das von einem Kryofluid (31) gekühlt wird und mit einer elektrischen Durchführung (10, 39) verbunden ist, die nacheinander einen Raum (12, 45) mit einer Temperatur zwischen der Umgebungstemperatur und der Temperatur des Kryofluids und einen Raum mit Umgebungstemperatur (15, 48) durchquert, wobei die Durchführung (10, 39) außerhalb des Raums mit Umgebungstemperatur mündet, wobei die Struktur **dadurch gekennzeichnet ist, dass** der Zwischentemperaturraum (12, 45) mindestens teilweise mit einem festen Werkstoff mit geringer thermischer Leitfähigkeit gefüllt ist.

2. Verbindungsstruktur nach Anspruch 1, **dadurch gekennzeichnet, dass** der Werkstoff auf Schaumstoffbasis ist.

3. Verbindungsstruktur nach Anspruch 1 oder 2, **dadurch gekennzeichnet, dass** der Werkstoff ein Schaumstoff aus Schaumglas oder ein Polyurethanschaum ist.

4. Verbindungsstruktur nach einem der vorangehenden Ansprüche, **dadurch gekennzeichnet, dass** die Seitenwände (18, 34-35) des Zwischentemperaturraums (12, 45) von den Wänden eines Kryostats gebildet werden.

5. Verbindungsstruktur nach einem der vorangehenden Ansprüche, **dadurch gekennzeichnet, dass** der Zwischentemperaturraum (12, 45) mit einem Sicherheitsventil (19, 62) ausgestattet ist.

6. Verbindungsstruktur nach einem der vorangehenden Ansprüche, **dadurch gekennzeichnet, dass** der Raum mit Umgebungstemperatur (15, 48) mindestens teilweise mit einer elektrisch isolierenden Flüssigkeit (54) gefüllt ist und **dadurch**, dass die Außenwände des Raums von einem elektrisch isolierenden Werkstoff gebildet werden.

7. Verbindungsstruktur nach Anspruch 6, **dadurch gekennzeichnet, dass** die Flüssigkeit (54) Öl ist.

8. Verbindungsstruktur nach einem der vorangehenden Ansprüche, **dadurch gekennzeichnet, dass** die elektrische Durchführung (10, 39) einen zentralen Leiter (40) aufweist, der von einer elektrisch isolierenden Hülle (41) umgeben ist, welche an einem (38) ihrer zwei Enden in Form einer Knolle (42) endet, die in das Kryofluid (31) mündet.

9. Verbindungsstruktur nach Anspruch 8, **dadurch gekennzeichnet, dass** die Knolle (42) einen dichten Befestigungsflansch (43) aufweist, um die Knolle am Zwischentemperaturraum zu befestigen.

10. Verbindungsstruktur nach einem der vorangehenden Ansprüche, **dadurch gekennzeichnet, dass** das supraleitende Element ein Kabel (30) ist.
